# EUROPEAN PATENT SPECIFICATION

(11) **EP 3 466 871 B1**
(45) Date of publication and mention of the grant of the patent: **08.12.2021**
(21) Application number: 17802811.4
(22) Date of filing: 23.05.2017
(51) Int. Cl.: C01B 21/086, C01B 21/093, H01M 10/052, H01M 10/0568, H01M 10/0525

(54) **METHOD FOR PRODUCING BIS(FLUOROSULFONYL)IMIDE ALKALI METAL SALT AND BIS(FLUOROSULFONYL)IMIDE ALKALI METAL SALT COMPOSITION**
VERFAHREN ZUR HERSTELLUNG VON BIS(FLUORSULFONYL)IMID-ALKALIMETALLSALZ UND BIS(FLUORSULFONYL)IMID-ALKALIMETALLSALZZUSAMMENSETZUNG
PROCÉDÉ DE FABRICATION DE SEL DE MÉTAL ALCALIN DE BIS(FLUOROSULFONYL)IMIDE, ET COMPOSITION DE SEL DE MÉTAL ALCALIN DE BIS(FLUOROSULFONYL)IMIDE

(30) Priority: 26.05.2016 JP 2016105630; 30.08.2016 JP 2016168438; 30.08.2016 JP 2016168439
(43) Date of publication of application: 10.04.2019
(73) Proprietor: Nippon Shokubai Co., Ltd., Osaka-shi, Osaka 541-0043 (JP)
(72) Inventor: YAMADA Kenji, Osaka-shi Osaka 532-0002 (JP); SHIMIZU Hirotsugu, Osaka-shi Osaka 532-0002 (JP); OKUMURA Yasunori, Suita-shi Osaka 564-0034 (JP); OKAJIMA Masayuki, Suita-shi Osaka 564-0034 (JP); KAWASE Takeo, Suita-shi Osaka 564-0034 (JP); KATSUYAMA Hiromoto, Suita-shi Osaka 564-0034 (JP); MIZUNO Hiroyuki, Suita-shi Osaka 564-0034 (JP); FUKATA Yukihiro, Suita-shi Osaka 564-0034 (JP); ITAYAMA Naohiko, Suita-shi Osaka 564-0034 (JP)
(74) Representative: Beder, Jens
(86) International application number: PCT/JP2017/019255
(87) International publication number: WO 2017/204225

(56) References cited:
- EP-A1- 2 578 533
- WO-A1-2012/117961
- WO-A1-2015/082532
- CA-A1- 2 527 802
- CN-A- 104 925 765
- JP-A- 2015 531 744
- JP-A- 2015 536 898
- YOSHIHARU MATSUDA et al.: "Lithium Niji Denchi no Fukyoku Juhoden Tokusei ni Oyobosu Denkaieki-chu no Imide-en Jundo no Eikyo", Abstracts of the 68th Annual Meeting of the Electrochemical Society of Japan, vol. 68, 25 March 2001 (2001-03-25), page 232, XP009515450,
- HAN, H.-B. et al.: "Lithium bis(fluorosulfonyl) imide (LiFSI) as conducting salt for nonaqueous liquid electrolytes for lithium-ion batteries: Physicochemical and electrochemical properties", Journal of Power Sources, vol. 196, no. 7, 21 December 2010 (2010-12-21), pages 3623-3632, XP028129764,
- Anonymous: "SAFETY DATA SHEET : (5N) 99.999% Lithium bis (fluorosulfonyl)imide", AMERICAN ELEMENTS , 15 May 2015 (2015-05-15), pages 1-8, XP055583946, Retrieved from the Internet: URL:https://www. americanelements.com/printpdf/product/2422 2/sds

## Description

### FIELD

The present invention relates to a method for producing bis (fluorosulfonyl) imide alkali metal salt and bis (fluorosulfonyl) imide alkali metal salt composition.

### BACKGROUND

The salts of fluorosulfonyl imide and their derivatives are useful as intermediates of compounds having N (SO₂F) groups or N (SO₂F)₂ groups. Also, they are useful compounds in a variety of applications such as electrolytes, additives to electrolyte liquids of fuel cells, selective electrophilic fluorinating agents, photo acid generators, thermal acid generators, and near-infrared absorbing dyes.

CA 2527802 A1describes a yield of not less than 99% of lithium salt of bis (fluorosulfonyl) imide is obtained by reacting an equimolar amount of bis (fluorosulfonyl) imide and lithium fluoride at 180 °C for 1 hour in an autoclave in the presence of hydrogen fluoride. However, since a large amount of highly corrosive hydrogen fluoride is used as a solvent, it is difficult to handle. Also, since it is necessary to remove the hydrogen fluoride used as the solvent from the product, there is room for improvement.

JP 2014-201453 A1describes a method of producing alkali metal salt of fluorosulfonylimide comprising a step of preparing the alkali metal salt of fluorosulfonylimide in the presence of a reaction solvent containing at least one solvent selected from the group consisting of a carbonate-based solvent, an aliphatic ether-based solvent, an ester-based solvent, an amide-based solvent, a nitro-based solvent, a sulfur-based solvent and a nitrilebased solvent. The method further comprises the step of concentrating the obtained solution of the alkali metal salt of fluorosulfonylimide in the co-presence of the reaction solvent and at least one of a poor solvent for the alkali metal salt of fluorosulfonylimide selected from the group consisting of an aromatic hydrocarbon-based solvent, aliphatic hydrocarbon-based solvent and an aromatic ether-based solvent by distilling off the reaction solvent. However, there is a risk that the alkali metal salt of fluorosulfonylimide may be decomposed during the concentration step, so it is difficult to highly reduce the content of the solvent.

WO 2015/082535 A1 discloses a method of producing lithium bis (fluorosulfonyl) imide, wherein a previously prepared bis (fluorosulfonyl) imide is reacted with a suspension of 1.15 g of lithium hydride in a large amount of 55 g of anhydrous butyl acetate as a solvent.

### SUMMARY

### TECHNICAL PROBLEM

Accordingly, the object of the present invention is to provide a method for producing a bis (fluorosulfonyl) imide alkali metal salt, which is easy to produce a bis (fluorosulfonyl) imide alkali metal salt, and to provide a an bis (fluorosulfonyl) imide alkali metal salt composition having highly reduced solvent content.

### SOLUTION TO PROBLEM

The inventors have intensively studied in order to solve the above-mentioned problems. And as a result, they found that in producing an bis (fluorosulfonyl) imide alkali metal salt by reacting a mixture containing a bis (fluorosulfonyl) imide and an alkali metal compound, when the total of weight ratio of a bis (fluorosulfonyl) imide, an alkali metal compound and an bis (fluorosulfonyl) imide alkali metal salt to an entire reacted mixture after the reaction is set to a specific value or more, a method for producing a bis (fluorosulfonyl) imide alkali metal salt, which is easy to produce an bis (fluorosulfonyl) imide alkali metal salt, and bis (fluorosulfonyl) imide alkali metal salt composition having highly reduced solvent content can be provided. Then finally, they have completed the present invention.

In a method for producing a bis (fluorosulfonyl) imide alkali metal salt of the present invention, the bis (fluorosulfonyl) imide alkali metal salt is produced by a reaction of a mixture containing bis (fluorosulfonyl) imide and an alkali metal compound. After the reaction, a total of weight ratios of the bis (fluorosulfonyl) imide, the alkali metal compound and the bis (fluorosulfonyl) imide alkali metal salt to an entire reacted mixture is not less than 0.8.

In the mixture containing bis (fluorosulfonyl) imide and the alkali metal compound at the beginning of the reaction, a total of weight ratios of the bis (fluorosulfonyl) imide and the alkali metal compound to the entire mixture containing bis (fluorosulfonyl) imide and the alkali metal compound is preferably not less than 0.8.

Preferably, the alkali metal compound is an alkali metal halide, and the method includes a step of removing a hydrogen halide formed during the reaction.

Preferably, the alkali metal compound is lithium fluoride, and the method includes a step of removing a hydrogen fluoride formed during the reaction.

Further, a temperature applied in the reaction of the mixture containing bis (fluorosulfonyl) imide and the alkali metal compound is preferably not less than 50 °C.

Furthermore, a pressure applied in the reaction of the mixture containing bis (fluorosulfonyl) imide and the alkali metal compound is preferably not higher than 1250 hPa.

Preferably, the alkali metal compound is lithium fluoride, and the method includes a step of removing a hydrogen fluoride formed during the reaction at a pressure of not higher than 1013 hPa.

In the present invention, a an bis (fluorosulfonyl) imide alkali metal salt composition comprises an amount of not less than 90 mass% of the bis (fluorosulfonyl) imide alkali metal salt, and an amount of not more than 100 mass ppm of solvents.

The bis (fluorosulfonyl) imide alkali metal salt composition of the present invention preferably comprises FSO₂ NH₂ in an amount of from 10 mass ppm to 1 mass%.

The bis (fluorosulfonyl) imide alkali metal salt composition of the present invention preferably comprises LiFSO₃ in an amount of from 100 mass ppm to 5 mass%.

### ADVANTAGEOUS EFFECTS OF INVENTION

According to the method for producing the bis (fluorosulfonyl) imide alkali metal salt of the present invention, the method for producing the bis (fluorosulfonyl) imide alkali metal salt, which is easy to produce an bis (fluorosulfonyl) imide alkali metal salt, and the bis (fluorosulfonyl) imide alkali metal salt composition having highly reduced solvent content can be provided.

### DESCRIPTION OF EMBODIMRNTS

### 1. Method for Producing Bis (fluorosulfonyl) imide Alkali Metal Salt

A method for producing a bis (fluorosulfonyl) imide alkali metal salt according to the present invention is the method for producing the bis (fluorosulfonyl) imide alkali metal salt by a reaction of a mixture containing bis (fluorosulfonyl) imide and an alkali metal compound. After the reaction, a total of weight ratios of the bis (fluorosulfonyl) imide, the alkali metal compound and the bis (fluorosulfonyl) imide alkali metal salt to an entire reacted mixture is not less than 0.8.

The method for producing the bis (fluorosulfonyl) imide alkali metal salt according to the present invention is characterized by the method for producing the bis (fluorosulfonyl) imide alkali metal salt by the reaction of the mixture containing bis (fluorosulfonyl) imide and the alkali metal compound, and characterized in that, after the reaction, the total of weight ratios of the bis (fluorosulfonyl) imide, the alkali metal compound and the bis (fluorosulfonyl) imide alkali metal salt to the entire reacted mixture is not less than 0.8. Therefore, steps other than the alkali metal salt production step of producing a bis (fluorosulfonyl) imide alkali metal salt by reacting the mixture containing bis (fluorosulfonyl) imide and the alkali metal compound are not particularly limited.

In the present invention, a method for preparing the bis (fluorosulfonyl) imide is not particularly limited. However, for example, a method for preparing the bis (fluorosulfonyl) imide by using a fluorinating agent from a bis (sulfonyl halide) imide can be used. In the bis (sulfonyl halide) imide, Cl, Br, I and At other than F are exemplified as a halogen.

A fluorination step of preparing the bis (fluorosulfonyl) imide by using the fluorinating agent from the bis (sulfonyl halide) imide will be described below.

### [Fluorination step]

In the fluorination step, the fluorination reaction of the bis (sulfonyl halide) imide is carried out. For example, a method described in CA2527802, and a method described in Jean'ne M. Shreeve et al., Inorg. Chem. 1998, 37 (24), 6295-6303 can be used. The bis (sulfonyl halide) imide as a starting raw material may be a commercially available one. It can also be a compound prepared by known methods. In addition, a method, described in JP 1996-511274 A, for preparing the bis (fluorosulfonyl) imide by using urea and fluorosulfonic acid can be used.

As the method for preparing the bis (fluorosulfonyl) imide by using the fluorinating agent from the bis (sulfonyl halide) imide, the method for using hydrogen fluoride as the fluorinating agent can be preferably used. As an example, a fluorination reaction of bis (chlorosulfonyl) imide is represented by formula (1) indicated below. For example, the bis (fluorosulfonyl) imide can be obtained by introducing the hydrogen fluoride into the bis (chlorosulfonyl) imide.

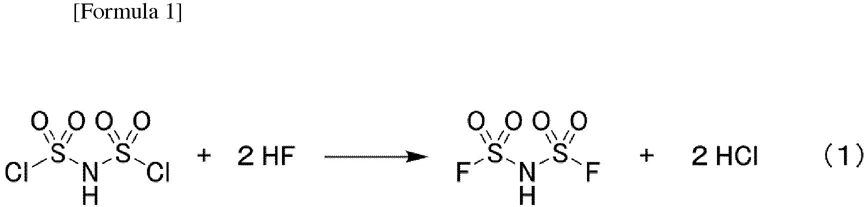

A molar ratio of the hydrogen fluoride to the bis (sulfonyl halide) imide at the starting point of the fluorination step is preferably not less than 2. As the lower limit, not less than 3, or not less than 5 can be exemplified. As the upper limit, not more than 100, not more than 50, not more than 20, or not more than 10 can be exemplified. By setting the molar ratio in this manner, the fluorination of the bis (sulfonyl halide) imide can be carried out more surely. In case of a small amount of use, it is not preferable because the reaction rate is lowered, and because the reaction is not sufficiently carried out. In case of a large amount of use, it is not preferable because the recovery of raw materials becomes complicated and the productivity may decrease.

The fluorination step is performed at a temperature of not less than 20 °C, not less than 40 °C, not less than 60 °C, or not less than 80 °C as a lower limit. As the upper limit of the temperature, not more than 200 °C, not more than 160 °C, not more than 140 °C, or not more than 120 °C can be mentioned.

The temperature can be selected appropriately by examining the reaction rate. The fluorination step can be carried out under either high pressure or normal pressure.

### [Alkali Metal Salt Production Step]

In the alkali metal salt production step, then bis (fluorosulfonyl) imide alkali metal salt is produced by reacting the mixture containing the bis (fluorosulfonyl) imide obtained by the above-mentioned methods and the alkali metal compound.

The reacted mixture is obtained by reacting a mixture containing the bis (fluorosulfonyl) imide and the alkali metal compound. The reacted mixture includes the unreacted bis (fluorosulfonyl) imide, the unreacted alkali metal compound, and the bis (fluorosulfonyl) imide alkali metal salt. After the reaction, a total of weight ratios of the bis (fluorosulfonyl) imide, the alkali metal compound and the bis (fluorosulfonyl) imide alkali metal salt to the entire reacted mixture is not less than 0.8, preferably not less than 0.85, more preferably not less than 0.9, further preferably not less than 0.95. After the reaction, when the total of weight ratios of the bis (fluorosulfonyl) imide, the alkali metal compound and the bis (fluorosulfonyl) imide alkali metal salt to the entire reacted mixture is in such a range, the reaction is easily handled because a reaction vessel such as an autoclave is not needed.

In the mixture containing the bis (fluorosulfonyl) imide and the alkali metal compound at the beginning of the reaction, a total of weight ratios of the bis (fluorosulfonyl) imide and the alkali metal compound to the entire mixture containing bis (fluorosulfonyl) imide and the alkali metal compound is preferably not less than 0.8, more preferably not less than 0.85, further preferably not less than 0.9, particularly preferably not less than 0.95. At the beginning of the reaction, when the total of weight ratios of the bis (fluorosulfonyl) imide and the alkali metal compound to the entire mixture containing bis (fluorosulfonyl) imide and the alkali metal compound is in such a range, the reaction is easily handled because a reaction vessel such as an autoclave is not needed.

### As the alkali metal, Li, Na, K, Rb, Cs or the like can be exemplified, and Li is preferable.

Examples of the alkali metal compound include hydroxides such as LiOH, NaOH, KOH, RbOH and CsOH; carbonates such as Li₂CO₃, Na₂CO₃, K₂CO₃, Rb₂CO₃ and Cs₂CO₃; hydrogencarbonates such as LiHCO₃, NaHCO₃, KHCO₃, RbHCO₃ and CsHCO₃; chlorides such as LiCl, NaCl, KCl, RbCl, CsCl; fluorides such as LiF, NaF, KF, RbF and CsF; alkoxide compounds such as CH₃OLi and EtOLi; alkyl-lithium compounds such as EtLi, BuLi and t-BuLi (Et represents an ethyl group, Bu represents a butyl group); or the like. Among them, alkali metal halides such as LiF, NaF, KF, LiCl, NaCl and KCl arc preferable, and LiF is particularly preferable.

In the method for producing the bis (fluorosulfonyl) imide alkali metal salt of the present invention, it is preferable that the alkali metal compound is the alkali metal halide, and that the method includes a step of removing a hydrogen halide formed during the reaction. Further, it is preferable that the alkali metal compound is lithium fluoride, and that the method includes a step of removing a hydrogen fluoride formed during the reaction.

As an example, preparation of lithium salt of bis (fluorosulfonyl) imide by reacting a mixture containing bis (fluorosulfonyl) imide and LiF is represented by formula (2) indicated below.

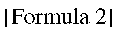

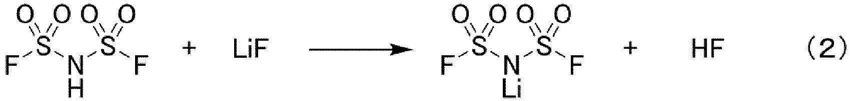

There is a possibility that the reacted mixture obtained after the reaction of the mixture containing the bis (fluorosulfonyl) imide and LiF includes unreacted bis (fluorosulfonyl) imide and unreacted LiF. The reacted mixture at least includes lithium salt of bis (fluorosulfonyl) imide and by-produced HF. The reacted mixture obtained after the reaction preferably includes FSO₂NH₂ and / or LiFSO₃.

After the reaction, a total of weight ratios of the bis (fluorosulfonyl) imide, LiF and the lithium salt of the bis (fluorosulfonyl) imide to an entire reacted mixture is not less than 0.8, preferably not less than 0.85, more preferably not less than 0.9, further preferably not less than 0.95. After the reaction, when the total of weight ratios of the bis (fluorosulfonyl) imide, LiF and the lithium salt of bis (fluorosulfonyl) imide to the entire reacted mixture is in such a range, a reaction vessel such as an autoclave is not needed, and a removal of hydrogen fluoride after the reaction becomes easy. Therefore, preferably, it is possible to provide the method for producing the bis (fluorosulfonyl) imide alkali metal salt, which can reduce the amount of hydrogen fluoride having high corrosivity and can easily remove hydrogen fluoride from the product. It is also preferable that a step of removing hydrogen fluoride formed during the reaction is included.

A total of weight ratios of the mixture containing bis (fluorosulfonyl) imide and LiF to the entire mixture containing the bis (fluorosulfonyl) imide and LiF at the beginning of the reaction is preferably not less than 0.8, more preferably not less than 0.85, further preferably not less than 0.9, particularly preferably not less than 0.95. When the total of weight ratios to the entire mixture containing the bis (fluorosulfonyl) imide and LiF at the beginning of the reaction is in such a range, a reaction vessel such as an autoclave is not needed and the removal of hydrogen fluoride after the reaction becomes easier.

In the alkali metal salt production step, hydrogen fluoride can be used in such a range that the total of weight ratios of the bis (fluorosulfonyl) imide, the alkali metal compound and the bis (fluorosulfonyl) imide alkali metal salt to the entire mixture after the reaction is not less than 0.8. In the alkali metal salt production step, hydrogen fluoride may not be used.

Also, in the method for producing the bis (fluorosulfonyl) imide alkali metal salt by the reaction of the mixture containing the bis (fluorosulfonyl) imide and the alkali metal compound of the present invention, when the alkali metal compound is lithium fluoride, it is preferable that a step of proceeding the mixture while removing the hydrogen fluoride at a pressure of not higher than 1013 hPa is included. The proceeding includes reaction, aging, and / or devolatilization.

In the method for producing the bis (fluorosulfonyl) imide alkali metal salt of the present invention, the total of weight ratios of the bis (fluorosulfonyl) imide and the alkali metal compound to the entire mixture containing bis (fluorosulfonyl) imide and the alkali metal compound at the beginning of the reaction is preferably not less than 0.8. The alkali metal salt producing reaction is carried out with a small amount of solvent or preferably without solvent. When the alkali metal compound is lithium fluoride, in order to promote the lithiation reaction, it is effective to remove HF (hydrogen fluoride) generated as a by-product from the system. The increase in the purity of LiFSI [bis (fluorosulfonyl) imide lithium salt] is limited, even if the mixture is aged at normal pressure at near the end of the reaction. The purity of LiFSI is effectively improved by removing HF under reduced pressure.

A reaction temperature of the mixture containing the bis (fluorosulfonyl) imide and the alkali metal compound is not less than 50 °C, preferably not less than 80 °C, more preferably not less than 100 °C, further preferably not less than 120 °C. An upper limit of the temperature is not more than 180 °C, or not more than 160 °C. The reaction can be performed even at 140 °C, or 150 °C. If the reaction temperature is too low, undesirably, the reaction may not proceed sufficiently. If the reaction temperature is too high, undesirably, the product may decompose. A pressure range of the reaction is preferably not more than 1250 hP, more preferably not more than 1150 hPa, further preferably not more than 1050 hPa, particularly preferably not more than 1013 hPa. When the alkali metal compound is lithium fluoride, the reaction may proceed while removing hydrogen fluoride at a pressure of not higher than 1013 hPa.

The mixture containing the bis (fluorosulfonyl) imide and the alkali metal compound may be aged after the reaction. An aging temperature is not less than 50 °C, preferably not less than 80 °C, more preferably not less than 100 °C, further preferably not less than 120 °C. An upper limit of the temperature is not more than 180 °C, or not more than 160 °C. The aging can be performed even at 140 °C, or 150 °C. If the aging temperature is too low, undesirably, the aging may not proceed sufficiently. If the aging temperature is too high, undesirably, the product may decompose. In the present invention, when the alkali metal compound is lithium fluoride, the aging preferably proceed while removing hydrogen fluoride at a pressure of not more than 1013 hPa. The removal of hydrogen fluoride may proceed by introducing gases into the system. Examples of the usable gases include inert gases such as nitrogen and argon, and dry air.

A devolatilizing temperature of the mixture containing the bis (fluorosulfonyl) imide and the alkali metal compound is not less than 50 °C, preferably not less than 80 °C, more preferably not less than 100 °C, further preferably not less than 120 °C. An upper limit of the temperature is not more than 180 °C, or not more than 160 °C. The devolatilizing can be performed even at 140 °C, or 150 °C. If the devolatilizing temperature is too low, undesirably, the devolatilizing may not proceed sufficiently. If the devolatilizing temperature is too high, undesirably, the product may decompose. Also, a pressure range for the devolatilization mentioned above is preferably less than 1013 hPa, more preferably not more than 1000 hPa, further preferably not more than 500 hPa, particularly preferably not more than 200 hPa, most preferably not more than 100 hPa. The devolatilization may proceed by introducing gases into the system, or may proceed by reducing the pressure and introducing the gases.

A molar ratio of the alkali metal contained in the alkali metal compound to bis (fluorosulfonyl) imide is preferably not less than 0.8, more preferably not less than 0.9, further preferably not less than 0.95. Also, it is preferably not more than 1.2, more preferably not more than 1.1, and further preferably not more than 1.05. Most preferably, the molar ratio is around 1.0. When the amount of bis (fluorosulfonyl) imide is excessive, the excess bis (fluorosulfonyl) imide can be removed by devolatilization. When the alkali metal contained in the alkali metal compound is excessive, the excess alkali metal can be removed by filtering after dissolving the obtained bis (fluorosulfonyl) imide alkali metal salt composition in an electrolyte solvent.

### [Step of Drying and Making into Powder]

The bis (fluorosulfonyl) imide alkali metal salt may be made into powder.

The method for drying and making the bis (fluorosulfonyl) imide alkali metal salt into powder is not particularly limited. When the hydrogen fluoride is contained, the following methods can be used, for example. (1) A method includes a step of removing the hydrogen fluoride at a temperature not lower than a melting point of the bis (fluorosulfonyl) imide alkali metal salt, and a next step of cooling down to not higher than the melting point and making into powder; (2) a method includes a step of making into powder at a temperature not higher than the melting point of the bis (fluorosulfonyl) imide alkali metal salt, and then, removing hydrogen fluoride; and (3) a method combining (1) and (2).

The drying method of the bis (fluorosulfonyl) imide alkali metal salt is not particularly limited, and conventional known drying devices can be used. When the drying is performed at the temperature not lower than the melting point of the bis (fluorosulfonyl) imide alkali metal salt, the drying temperature is preferably not less than 140 °C. When the drying is performed at the temperature not higher than the melting point, the drying temperature is preferably 0 °C to 140 °C, more preferably not less than 10 °C, and further preferably not less than 20 °C. The bis (fluorosulfonyl) imide alkali metal salt can be dried by a method for drying under the reduced pressure, a method for drying while supplying gases to the drying devices, or a combination of these methods. Examples of the gases to be able to use include inert gases such as nitrogen and argon, and dry air. In particular, in the case of containing hydrogen fluoride, since the boiling point of hydrogen fluoride is less than 20 °C, it can be effectively dried in the above-mentioned temperature range.

The raw materials such as bis (chlorosulfonyl) imide, an hydrogen fluoride, and the alkali metal compounds, preferably used in the above-mentioned steps, can be purified with known methods such as distillation, crystallization and reprecipitation after dissolve in a solvent if necessary.

Preferably, the bis (chlorosulfonyl) imide, the hydrogen fluoride and the alkali metal compound used as raw materials; the bis (fluorosulfonyl) imide and the bis (fluorosulfonyl) imide alkali metal salt as products; and hydrogen chloride, hydrogen fluoride, and the like which may be generated as by-products can be recovered by known methods such as istillation, crystallization and reprecipitation after dissolving in solvents if necessary.

### 2. Bis (fluorosulfonyl) imide Alkali Metal Salt Composition

In the present invention, bis (fluorosulfonyl) imide alkali metal salt composition comprises an amount of not less than 90 mass% of the bis (fluorosulfonyl) imide alkali metal salt, and an amount of not more than 100 mass ppm of solvents. By the amount of the solvent in the bis (fluorosulfonyl) imide alkali metal salt composition being not more than 100 mass ppm, when the composition is used as electrolytic solution of cells, oxidative decomposition is reduced, and it can be used well for the cells. In the bis (fluorosulfonyl) imide alkali metal salt composition, the examples of the alkali metal salt include Li, Na, K, Rb, Cs or the like, and Li is preferable.

In the present invention, a content of the bis (fluorosulfonyl) imide alkali metal salt in the bis (fluorosulfonyl) imide alkali metal salt composition is preferably not less than 95 mass%, more preferably not less than 97 mass%, further preferably not less than 98 mass%, and particularly preferably not less than 99 mass%. Also, the content of the solvent is preferably not more than 70 mass ppm, more preferably not more than 50 mass ppm, further preferably not more than 30 mass ppm, particularly preferably not more than 10 mass ppm, more particularly preferably not more than 1 mass ppm, and most preferably no solvent.

As the solvent, for example, an organic solvent can be used. A boiling point of the solvent is, for example, 0 to 250 °C. Specifically, examples of the solvents include aprotic solvents. The aprotic solvents are exemplified aliphatic ether solvents such as dimethoxymethane, 1, 2-dimethoxyethane, tetrahydrofuran, 2-methyltetrahydrofuran, 1, 3-dioxane, 4-methyl-1, 3-dioxolane, cyclopentylmethyl ether, methyl-t-butyl ether, diethylene glycol dimethyl ether, diethylene glycol diethyl ether and triethylene glycol dimethyl ether; ester solvents such as methyl formate, methyl acetate, ethyl acetate, isopropyl acetate, butyl acetate and methyl propionate; amide solvents such as N, N-dimethylformamide and N- methyl oxazolidinone; nitro solvents such as nitromethane and nitrobenzene; sulfur-based solvents such as sulfolane, 3-methyl sulfolane and dimethyl sulfoxide; nitrile solvents such as acetonitrile, propionitrile, isobutyronitrile, butyronitrile, valeronitrile and benzonitrile. Also, examples of the solvents include poor solvents for fluorosulfonylimide alkali metal salts such as aromatic hydrocarbon solvents; linear, branched or cyclic aliphatic hydrocarbon solvents; and aromatic ether solvents.

Examples of the poor solvent include aromatic hydrocarbon solvents such as toluene (boiling point 110.6 °C), o-xylene (boiling point 144 °C), m-xylene (boiling point 139 °C), p-xylene (boiling point 138 °C), ethylbenzene (boiling point 136 °C), isopropylbenzene (boiling point 153 °C), 1,2,3-trimethylbenzene (boiling point 169 °C), 1,2,4-trimethylbenzene (boiling point 168 °C), 1,3,5-trimethylbenzene (boiling point 165 °C), tetralin (boiling point 208 °C), cymene (boiling point 177 °C), methylethylbenzene (boiling point 153 °C) and 2-ethyltoluene (boiling point 164 °C); linear or branched aliphatic hydrocarbon solvents such as octane (boiling point 127 °C), decane (boiling point 174 °C), dodecane (boiling point 217 °C), undecane (boiling point 196 °C), tridecane (boiling point 234 °C), decalin (boiling point 191 °C), 2,2,4,6,6-pentamethylheptane (boiling point 170 °C - 195 °C), isoparaffin [e.g., "MARUKASOL R" (a mixture of 2,2,4,6,6-pentamethylheptane and 2,2,4,4,6-pentamethylheptane manufactured by Maruzen Petrochemical Co., LTD., boiling point 178 °C - 181 °C), "Isopar (registered trademark) G" (C 9 -C 11 mixed isoparaffin manufactured by Exxon Mobil Corporation, boiling point 167 °C - 176 °C) and "Isopar (registered trademark) E" (C 8 - C 10 mixed isoparaffin manufactured by Exxon Mobil Corporation, boiling point 115 °C -140 °C)]; cyclic aliphatic hydrocarbon solvents such as cyclohexane (boiling point 81 °C), methylcyclohexane (boiling point 101 °C), 1,2-dimethylcyclohexane (boiling point 123 °C), 1,3-dimethylcyclohexane (boiling point 120 °C), 1,4-dimethylcyclohexane (boiling point 119 °C), ethylcyclohexane (boiling point 130 °C), 1,2,4-trimethylcyclohexane (boiling point 145 °C), 1,3,5-trimethylcyclohexane (boiling point 140 °C), propylcyclohexane (boiling point 155 °C), butylcyclohexane (boiling point 178 °C) and alkylcyclohexane having 8 to 12 carbon atoms [e.g., "SWACLEAN 150" (mixture of C9 alkylcyclohexane manufactured by Maruzen Petrochemical Co., LTD, boiling point 152 °C - 170 °C)]; aromatic ether solvents such as anisole (boiling point 154 °C), 2-methylanisole (boiling point 170 °C), 3-methylanisole (boiling point 175 °C) and 4-methylanisole (boiling point 174 °C); and the like.

However, the solvent defined by the present invention is not particularly limited to the above specific examples.

In the present invention, the bis (fluorosulfonyl) imide alkali metal salt composition preferably contains 10 mass ppm to 1 mass % of FSO₂NH₂. The content of FSO₂NH₂ is preferably not less than 10 mass ppm, more preferably not less than 100 mass ppm, further preferably not less than 500 mass ppm, particularly preferably not less than 1,000 mass ppm. Also, it is preferably not more than 1 mass %, more preferably not more than 0.7 mass %, further preferably not more than 0.5 mass %, particularly preferably not more than 0.3 mass %. When the composition is used for the secondary cells or the like with the content of FSO₂NH₂ in such range, input / output characteristics at low-temperature, rate characteristics and (45 °C) cycle characteristics of secondary cells or the like are improved. The content of FSO₂NH₂ can be measured by F-NMR.

In other embodiments of the bis (fluorosulfonyl) imide alkali metal salt composition, the amount of the solvent is not particularly limited, and the embodiments containing 10 mass ppm to 1 mass% of FSO₂NH₂ are also preferable.

In the present invention, the bis (fluorosulfonyl) imide alkali metal salt composition preferably contains 100 mass ppm to 5 mass % of LiFSO₃. The content of LiFSO₃ is preferably not less than 100 mass ppm, more preferably not less than 500 mass ppm, further preferably not less than 1,000 mass ppm, still more preferably not less than 3000 mass ppm, particularly preferably not less than 5000 mass ppm. Also, it is preferably not more than 5 mass %, more preferably not more than 4 mass %, further preferably not more than 3.5 mass %, still more preferably not less than 2 mass %, particularly preferably not more than 1 mass %, and most preferably not less than 0.7 mass % . When the composition is used for the secondary cells or the like with the content of LiFSO₃ in such range, input / output characteristics at low-temperature, the rate characteristics and (45 °C) cycle characteristics of secondary cells or the like are improved. The content of LiFSO₃ can be measured by F-NMR.

In other embodiments of the bis (fluorosulfonyl) imide alkali metal salt composition, the amount of the solvent is not particularly limited, and the embodiments containing 100 mass ppm to 5 mass% of LiFSO₃ are also preferable.

In the present invention, the bis (fluorosulfonyl) imide alkali metal salt composition preferably further contains more than 1000 mass ppm of F ⁻ ion, more preferably more than 1000 mass ppm and not more than 50,000 mass ppm, further preferably more than 1000 mass ppm to not more than 30,000 mass ppm, and particularly preferably more than 1,000 mass ppm to not more than 20,000 mass ppm. By including more than 1000 mass ppm of F ⁻ ions, for example, the contained F ⁻ ionic component reacts with positive electrode active materials to form a fluorine-containing protective covered layer on the surface of the positive electrode active materials. So, when the composition is used in the secondary cells or the like, preferably, elution of metal after leaving the secondary cells at high temperature and high voltage can be suppressed, and the capacity retention rate can be further improved. The content of F ⁻ ion can be measured by anion ion chromatography.

In the bis (fluorosulfonyl) imide alkali metal salt composition of the present invention, the content of SO ₄ ²⁻ ion is preferably not more than 10,000 mass ppm, more preferably not more than 6,000 mass ppm, further preferably not more than 1000 mass ppm, particularly preferably not more than 500 mass ppm, and most preferably not more than 300 mass ppm. In the bis (fluorosulfonyl) imide alkali metal salt composition according to the present invention, by setting the content of SO ₄ ²⁻ ion to not more than 10,000 mass ppm, even when used in electrolytic solutions for electrochemical devices, problems such as decomposition of the electrolytic solutions and corrosion of the components of the electrochemical device do not easily occur. The content of SO ₄ ²⁻ ion can be measured by anion ion chromatography.

In the bis (fluorosulfonyl) imide alkali metal salt composition of the present invention, the content of HF (hydrogen fluoride) is preferably not more than 5000 mass ppm, more preferably from not less than 50 mass ppm to not more than 5000 mass ppm. If the HF concentration is too high, in some cases, HF corrodes the positive electrode active materials or positive electrode aluminum current collectors, and metal elution may be more promoted. Therefore, the amount of HF is preferably not more than 5000 mass ppm. The content of HF can be measured by dissolving the bis (fluorosulfonyl) imide alkali metal salt composition in dehydrated methanol, titrating with NaOH methanol solution and obtained acid content is measured as HF.

### 3. Electrolytic Solution

The electrolytic solution preferably contains more than 0.5 mol/ L of the bis (fluorosulfonyl) imide alkali metal salt composition. The bis (fluorosulfonyl) imide alkali metal salt composition preferably contains not less than 90 mass % of the bis (fluorosulfonyl) imide alkali metal salt, 10 mass ppm to 1 mass% of FSO₂NH₂ and / or 100 mass ppm to 5 mass % of LiFSO₃. The content of the bis (fluorosulfonyl) imide alkali metal salt composition in the electrolytic solution is preferably more than 0.5 mol / L and not more than 6.0 mol / L, more preferably from 0.6 to 4.0 mol / L, further preferably from 0.6 to 2.0 mol / L, and most preferably from 0.6 to 1.5 mol/ L. By setting the content of the bis (fluorosulfonyl) imide alkali metal salt composition in the electrolytic solution to such a range, cell performance can be improved.

The electrolytic solution may contain other known components. Examples of the other components include other lithium salts such as LiPF₆, radical scavengers such as antioxidants and flame retardants, and redox type stabilizers.

The electrolytic solution may contain solvents. The solvents which can be used for the electrolytic solution are not particularly limited as long as they can dissolve and disperse electrolytic salts (for example, the sulfonylimide compounds and the above-mentioned lithium salts). Examples of the solvents include non-aqueous solvents such as cyclic carbonates and solvents other than the cyclic carbonates, and media such as polymers and polymer gels used in place of solvents. As the solvents, any of the conventionally known solvents used in cells can be used.

In the electrolytic solution, preferably, deterioration of capacity upon the leaving at high-temperature can be further suppressed by using the bis (fluorosulfonyl) imide alkali metal salt composition containing FSO₂NH₂ and / or LiFSO₃. Especially, in high-voltage and high-temperature environments, its effect is remarkable. As estimation mechanisms, it is considered that LiFSO₃ forms a covered layer on the positive electrode side to suppress solvent decomposition at high temperature, so that self-discharge is reduced and capacity deterioration is suppressed. In addition, it is considered that LiFSO₃ also acts on negative electrodes to form a thin covered layer having high ion conductivity, and input / output characteristics at low-temperature and the rate characteristics are improved. However, when the amount of LiFSO₃ is too large, the above covered layer becomes too thick and the layer resistance rises, so the cell performance deteriorates.

### 4. Electrolytic Solution Manufacturing Process

In the electrolytic solution manufacturing process, the electrolytic solution containing more than 0.5 mol / L of the bis (fluorosulfonyl) imide alkali metal salt composition obtained in the bis (fluorosulfonyl) imide alkali metal salt composition manufacturing process. The content of the bis (fluorosulfonyl) imide alkali metal salt composition in the electrolytic solution is preferably more than 0.5 mol / L and not more than 2.0 mol / L, more preferably from 0.6 to 1.5 mol/ L.

In the method for producing the electrolytic solution of the present invention, the bis (fluorosulfonyl) imide alkali metal salt composition obtained in a bis (fluorosulfonyl) imide alkali metal salt composition production step can be used directly without subjecting to a purification step. Therefore, the production cost of the electrolytic solution containing the bis (fluorosulfonyl) imide alkali metal salt can be suppressed.

### 5. Cell

The cell includes the above-mentioned electrolytic solution, the negative electrode and the positive electrode. Specifically, examples of the cell include primary cells, lithium ion secondary cells, cells having charging and discharging mechanisms. Hereinafter, the lithium ion secondary cells will be described as representatives of these.

The lithium ion secondary cell includes a positive electrode containing a positive electrode active material capable of inserting and extracting lithium ions, a negative electrode containing a negative electrode active material capable of inserting and extracting lithium ions, and the electrolytic solution. More specifically, a separator is provided between the positive electrode and the negative electrode, and the electrolytic solution is contained in the outer case together with the positive electrode, the negative electrode, etc. in a state of being impregnated in the separator.

### 5-1 Positive Electrode

The positive electrode includes a positive electrode mixture. The positive electrode mixture contains positive electrode active materials, conductive aids, binder and the like. The positive electrode mixture is supported on positive electrode current collectors. The positive electrode is usually formed into a sheet shape.

The method for producing the positive electrode is not particularly limited, and the following methods are exemplified. (i) a method comprising a step of coating a positive electrode active material composition, in which a positive electrode mixture is dissolved or dispersed in a dispersion solvent, to a positive electrode current collector by a doctor blade method etc., or a step of immersing the positive electrode current collector into the positive electrode active material composition, and drying; (ii) a method comprising a step of joining a sheet, obtained by kneading, shaping and drying the positive electrode active material composition, to the positive electrode current collector via an electro-conductive adhesive, and then pressing and drying; (iii) a method comprising a first step of coating or casting the positive electrode active material composition in addition with a liquid lubricant on the positive electrode current collector to form into a desired shape, a second step of removing the liquid lubricant, and a third step of stretching in an uniaxial or multiaxial direction. Further, if necessary, the dried positive electrode mixture layer may be pressurized. As a result, adhesion strength between the positive electrode mixture layer and the positive electrode current collector increases and an electrode density also increases.

The materials of the positive electrode current collector, the positive electrode active materials, the conductive aids, the binder, and the solvents used for the positive electrode active material composition (the solvents which disperse or dissolve the positive electrode mixture) are not particularly limited, and conventionally known materials can be used. For example, each material described in JP2014-13704A can be used.

The amount to be used of the positive electrode active materials is preferably not less than 75 parts by mass and not more than 99 parts by mass with respect to 100 parts by mass of the positive electrode mixture, more preferably not less than 85 parts by mass, further preferably not less than 90 parts by mass, more preferably not more than 98 parts by mass, and further preferably not more than 97 parts by mass.

When the conductive aid is used, a content of the conductive aid in the positive electrode mixture is preferably in the range of 0.1 mass % to 10 mass % with respect to 100 mass % of the positive electrode mixture (more preferably 0.5 mass % to 10 mass %, further preferably 1 mass % to 10 mass %). If the amount of the conductive aid is too small, the conductivity becomes extremely poor, and load characteristics and discharge capacity may deteriorate. On the other hand, when the amount is too large, the bulk density of the positive electrode mixture layer becomes high, which is not preferable because it is necessary to further increase a content of the binder.

When the binder is used, a content of the binder in the positive electrode mixture is preferably from 0.1mass % to 10mass % with respect to 100mass % of the positive electrode mixture (more preferably from 0.5 mass% to 9 mass%, more preferably from 1 mass% to 8 mass%). If the amount of the binder is too small, good adhesion cannot be obtained, and the positive electrode active material and the conductive aid may be detached from the current collector. On the other hand, if the binder is too much, there is a possibility that the internal resistance is increased and the cell characteristics are adversely affected.

The compounding amounts of the conductive aid and the binder can be appropriately adjusted in consideration of the use purpose of the cell (output prioritized, energy prioritized, etc.), ion conductivity, and the like.

### 5-2 Negative Electrode

The negative electrode includes a negative electrode mixture. The negative electrode mixture contains negative electrode active materials, binder, and if necessary, conductive aids and the like. The negative electrode mixture is supported on negative electrode current collectors. The negative electrode is usually formed into a sheet shape.

As manufacturing methods of the negative electrode, the same method as the manufacturing methods of the positive electrode can be adopted. For the conductive aids, the binder, and the solvents for dispersing the materials used in the negative electrode production, the same materials used in the positive electrode production can be used.

As materials of the negative electrode current collectors and negative electrode active materials, a conventionally known negative electrode active materials can be used. For example, each material described in JP 2014-13704A can be used.

### 5-3 Separator

The separator is arranged to separate the positive electrode from the negative electrode. The separator is not particularly limited, in the present invention, any conventionally known separator can be used. For example, each material described in JP 2014-13704A can be used.

### 5-4 Exterior Material for Cell

Cell elements provided with the positive electrode, the negative electrode, the separator, the electrolytic solution and the like are held in an exterior material for the cell to protect the cell elements from outside impacts, environmental deterioration, etc. upon using a lithium ion secondary cell. In the present invention, materials of the exterior material for the cell are not particularly limited, and any of conventionally known exterior materials can be used.

The shape of the lithium ion secondary cell is not particularly limited, and any shape known in the art as the shape of the lithium ion secondary cell such as cylindrical shape, square shape, laminate shape, coin shape and large shape or the like can be used. When the lithium ion secondary cell is used as a high-voltage power supply (several tens of volts to several hundreds of volts) for mounting in an electric vehicle, a hybrid electric vehicle or the like, it may be a cell module configured by connecting individual cells in series.

Although a rated charging voltage of the lithium ion secondary cell is not particularly limited, it is preferably not less than 3.6 V, more preferably not less than 4.1 V, and most preferably more than 4.2 V. The effect of the present invention becomes remarkable when the lithium ion secondary cell is used at a voltage of more than 4.2 V, more preferably not less than 4.3 V, and further preferably not less than 4.35 V. The higher the rated charging voltage, the higher the energy density can be, but if it is too high, it may be difficult to ensure safety. Therefore, the rated charging voltage is preferably not more than 4.6 V, more preferably not more than 4.5 V.

### EXAMPLES

Hereinafter, the present invention will be described in more detail with reference to examples, but the present invention is not limited by the following examples as well as the present invention, and appropriate modifications are of course also possible to made within a range that can conform to the gist of the foregoing and the following to implement the invention, and all of them are included in the technical scope of the present invention.

### [Measurement of NMR]

Measurements of ¹H-NMR and ¹⁹F-NMR were carried out with "Unity Plus-400" manufactured by Varian, Inc. (internal standard substance: benzenesulfonyl fluoride, solvent: trideuteroacetonitrile, accumulation number: 16 times).

### [ICP Emission Spectroscopic Analysis Method]

1 mass % of aqueous solutions containing 0.1 g of LiFSI [lithium bis (fluorosulfonyl) imide] obtained in the following experimental examples and 9.9 g of ultrapure water were used as measurement samples, and multi-type ICP emission spectroscopic analyzer ("ICPE-9000" manufactured by Shimadzu Corporation) was used.

### [Ion Chromatography Analysis Method]

0.01 g of LiFSI obtained in the following experimental examples were diluted by a factor of 1000 with ultrapure water (more than 18.2 Ω · cm) to prepare measurement solutions, and F ⁻ ion and SO₄ ²⁻ ion contained in LiFSI were measured with ion chromatography system ICS-3000 (manufactured by Nippon Dionex K.K.).
Isolation mode: Ion exchange
Eluent: 7 to 20 mM KOH aqueous solution
Detector: Electrical conductivity detector
Column: Column for anion analysis Ion PAC AS-17C (manufactured by Nippon Dionex K.K.)

### [Headspace Gas Chromatography Analysis Method]

200 µl of dimethylsulfoxide aqueous solution (dimethylsulfoxide / ultrapure water = 20/80, volume ratio), and 2 ml of 20 mass% sodium chloride aqueous solution were added to 0.05 g of the LiFSI composition obtained in the following examples to make a measurement solution. The measurement solution was placed in a vial bottle, hermetically sealed, and measured an amount of residual solvent contained in fluorosulfonylimide alkali metal salt with headspace-gas chromatography system ("Agilent 6890", manufactured by Agilent Technologies, Inc.).
Apparatus: Agilent 6890
Column: HP-5 (length: 30 m, column inner diameter: 0.32 mm, film thickness: 0.25 µm) (manufactured by Agilent Technologies, Inc.)
Column temperature condition: 60 °C (held for 2 minutes), heating up to 300 °C by 30 °C /minute, 300 °C (held for 2 minutes)
Head space condition: 80 °C (held for 30 minutes)
Injector temperature: 250 °C
Detector: FID (300 °C)

LiFSI was prepared by the following manufacturing method.

### Example 1

1.43 g (55 mmol) of LiF was weighed out and put into a PFA (made of fluororesin) reaction vessel. The reaction vessel was cooled with ice, and 7.45 g (41 mmol) of HFSI [bis (fluorosulfonyl) imide] was added. The solution for reaction was heated to 120 °C and reacted for 1.5 hours. The reacted solution was dried under reduced pressure for 2 hours at 10 hPa at 140 °C. As a result, 7.40 g of LiFSI was obtained. The amount of LiFSI produced was determined by F-NMR measurement.

### Example 2

1.17 g (45 mmol) of LiF was weighed out and put into a PFA reaction vessel. The reaction vessel was cooled with ice, and 9.59 g (53 mmol) of HFSI was added. The solution for reaction was heated to 120 °C and reacted for 1.5 hours. The reacted solution was dried under reduced pressure for 2 hours at 10 hPa at 140 °C. As a result, 7.30 g of LiFSI was obtained. The amount of LiFSI produced was determined in the same manner as in Example 1.

### Example 3

20.0 g (110.6 mmol) of HFSI and 2.57 g (99.5 mmol) of LiF were weighed out and put into a 100 mL flask made of PFA. The solution for reaction was heated to 140 °C under normal pressure (1013 hPa) and reacted for 15 minutes, then depressurized to 2 kPa and devolatilized at 143 °C for 1 hour. Thereafter, the reacted solution was cooled to obtain 19.4 g of composition mainly containing LiFSI. The values obtained by analysis are shown in Table 1.

The amount of the solvent was measured with Agilent 6890N Network GC System, and the amount of less than 1 mass ppm which is the detection limit was defined as no detection (N.D.).

### Examples 4 and 5

Compositions mainly containing LiFSI were obtained respectively in the same manner as in Example 3 except that the amount of LiF used was changed to have the molar ratio of HFSI / LiF shown in Table 1. The values obtained by analysis are shown in Table 1.

### Example 6

101.0 g (558 mmol) of HFSI and 14.5 g (558 mmol) of LiF were weighed out and put into a 100 mL flask made of PFA. The solution for reaction was heated to 150 °C under normal pressure (1013 hPa), and reacted for 15 minutes, then depressurized to 50 kPa and aged for 1 hour. Thereafter, the pressure was reduced to 10 kPa, and devolatilization treatment was performed for 1 hour at 145 to 150 °C under nitrogen flow of 10 mL / min. The resulted solution for the reaction was cooled to obtain 103.3 g of composition mainly containing LiFSI. The values obtained by analysis are shown in Table 1.

### Example 7

Composition mainly containing LiFSI was obtained in the same manner as in Example 6 except that the amount of LiF used was changed to have the molar ratio of HFSI / LiF shown in Table 1. The values obtained by analysis are shown in Table 1.

### Comparative Example 1

### [Fluorosulfonyl imide Synthesis Step (Fluorination Step)]

990 g of butyl acetate was added to a Pyrex (registered trademark) reaction vessel A (internal capacity 5 L) equipped with a stirrer under nitrogen stream, and 110 g (514 mmol) of bis (chlorosulfonyl) imide was added dropwise at room temperature (25 °C).

55.6 g [540 mmol, 1.05 equivalent based on bis (chlorosulfonyl) imide] of zinc fluoride was added all at once at room temperature to the obtained butyl acetate solution of bis (chlorosulfonyl) imide, and stirred at room temperature for 6 hours to be completely dissolved.

### [Cation Exchange Step 1 - Synthesis of Ammonium Salt]

297 g (4360 mmol, 8.49 equivalent based on bis (chlorosulfonyl) imide) of 25 mass% aqueous ammonia was added to Pyrex (registered trademark) reaction vessel B (internal capacity 3 L). The solution for reaction in the reaction vessel A was added dropwise to the reaction vessel B at room temperature under stirring ammonia water. After completion of the dropwise addition of the solution for the reaction, stirring was stopped. From the reacted solution divided into two layers of an aqueous layer and a butyl acetate layer, the aqueous layer containing by-products such as zinc chloride was removed to obtain ammonium bis (fluorosulfonyl) imide of butyl acetate solution as an organic layer.

¹⁹F-NMR (solvent: trideuteroacetonitrile) measurement was carried out on the obtained organic layer as a sample. In the obtained chart, the crude yield of the ammonium bis (fluorosulfonyl) imide contained in the organic layer was determined (416 mmol) from the amount of trifluoromethylbenzene added as an internal standard substance and the comparison of the integrated value of the peak derived from trifluoromethylbenzene with that derived from the target product. ¹⁹F-NMR (solvent: trideuteroacetonitrile): δ 56.0

### [Cation Exchange Step 2 - Synthesis of Lithium Salt]

133 g of 15 mass% lithium hydroxide aqueous solution (834 mmol as Li) was added to the ammonium bis (fluorosulfonyl) imide contained in the obtained organic layer such that the amount of lithium was 2 equivalents based on the ammonium bis (fluorosulfonyl) imide. The resulting mixture was stirred at room temperature for 10 minutes. Thereafter, aqueous layer was removed from the reacted solution to obtain a butyl acetate solution of lithium bis (fluorosulfonyl) imide.

The obtained organic layer was used as a sample for analysis, it was confirmed by the ICP emission spectroscopic analysis that protons of fluorosulfonylimide were exchanged for lithium ions. The concentration of lithium bis (fluorosulfonyl) imide in the organic layer was 7 mass% (yield: 994 g, lithium bis (fluorosulfonyl) imide yield: 69.6 g).

The concentration of fluorosulfonylimide was determined from the amount of trifluoromethylbenzene added as an internal standard substance and the comparison of an integrated value of the peak derived from trifluoromethylbenzene with that derived from the target product, in the chart of the measurement results of ¹⁹F-NMR (solvent: trideuteroacetonitrile) measurement about the obtained organic layer as a sample.

### [Concentration Step]

By using a rotary evaporator ("REN-1000", manufactured by IWAKI Corporation), under reduced pressure, the solvent for the reaction is partially removed from the butyl acetate solution of lithium bis (fluorosulfonyl) imide obtained in the cation exchange step 2, then, 162 g of lithium bis (fluorosulfonyl) imide solution (concentration: 43 mass%) is obtained.

162 g of butyl acetate solution containing 69.6 g of lithium bis (fluorosulfonyl) imide was added to a 500 mL separable flask equipped with a dropping funnel, a cooling tube and a distillation receiver. By using a vacuum pump, the interior of the separable flask was evacuated to 667 Pa, the separable flask was put into an oil bath heated at 55 °C. Then, butyl acetate as the reaction solvent used in the fluorosulfonylimide synthesis step and the following steps was distilled out by slowly heating while stirring the butyl acetate solution in the separable flask. 1,2,4-trimethylbenzene of the same volume as the total volume of liquid collected in the distillate receiver for 10 minutes from the start of distillation was added as a poor solvent to the separable flask. Thereafter, 1,2,4-trimethylbenzene of the same volume as the distilled liquid volume was continuously added into the separable flask every 10 minutes to change mixing ratio of butyl acetate (the reaction solvent) and 1,2,4-trimethylbenzene in the system while concentrating the reacted solution. As the result, white crystals of lithium bis (fluorosulfonyl) imide were precipitated. After repeating the above operation until the supernatant liquid in the separable flask became transparent, the flask was cooled to room temperature and the obtained suspension of lithium bis (fluorosulfonyl) imide crystals was filtered to collect lithium bis (fluorosulfonyl) imide crystals by filtration. The time from the start of the heating of the butyl acetate solution to the completion of the concentration step was 6 hours, and the time required until the start of white crystal precipitation was 2 hours.

Then, the obtained crystal was washed with a small amount of hexane, transferred to a flat bottom vat, and dried under reduced pressure at 55 °C and 667 Pa for 12 hours to obtain white crystals of lithium bis (fluorosulfonyl) imide (yield: 65 .4 g). The values obtained by analysis are shown in Table 1.

### [Table 1]

**Table 1**

| | | Example 3 | Example 4 | Example 5 | Example 6 | Example 7 | Comparative Example 1 |
|---|---|---|---|---|---|---|---|
| HFSI/LiF | molar ratic | 1/0.9 | 1/1 | 1/1.1 | 1/1 | 1.1/1 | - |
| Reaction temperature | °C | 140 | 140 | 140 | 150 | 150 | - |
| Amount of LiFSO₃ | mass ppm | 3900 | 6300 | 7100 | 1500 | 1300 | N.D. |
| Amount of FSO₂NH₂ | mass ppm | 5000 | 3200 | 830 | 4000 | 4200 | N.D. |
| Amount of F⁻ | mass ppm | 1400 | 4460 | 14800 | 3740 | 800 | - |
| Amount of solvent | mass ppm | N.D. | N.D. | N.D. | N.D. | N.D. | 1070 |

### <Evaluation of Withstand Voltage Property>

LSV (Linear Sweep Voltammetry) measurement was carried out by using the samples obtained in Example 3 and Comparative Example 1. These samples were measured with HZ 3000 manufactured by Hokuto Denko Corporation, under a condition at 25 °C and dew point not more than -40 °C, by using Li for a reference electrode, glassy carbon for a working electrode, platinum for a counter electrode, and a sweep speed of 0.5 mV / sec in 3 V to 7 V. 1 M LiFSI with EC / EMC = 3/7 solution was used for measuring liquid. In the case of using the sample of Example 3, a decomposition current value in 5 V was 0.003 mA / cm², however, in the case of using the sample of Comparative Example 1, a decomposition current value in 5 V was 0.25 mA / cm².

### <Cell Evaluation>

Cell performance evaluation was carried out by using the samples obtained in Examples 3 to 5 and Comparative Example 1. The results are summarized in Table 2.

### [Table 2]

**Table 2**

| | 0.2C capacity mAh/g 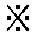 ¹ | 2C capacity mAh/g 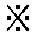 ¹ | 0.2C/2C % 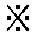 ¹ | 0°C1C discharge mAh/g 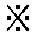 ¹ | 0°C1C charge mAh/g 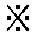 ³ | 45°C 500 cycle % 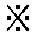 ⁴ |
|---|---|---|---|---|---|---|
| Example 3 | 149.9 | 132.5 | 88.4 | 115.8 | 120.6 | 85.1 |
| Example 4 | 149.9 | 132.4 | 88.3 | 115.6 | 121.3 | 85.6 |
| Example 5 | 149.3 | 131.5 | 88.1 | 115.4 | 121.4 | 85.8 |
| Comparative Example 1 | 149.0 | 129.7 | 87.0 | 112.7 | 119.2 | 84.5 |

| | | | | | | |
|---|---|---|---|---|---|---|
| Examination result for laminate cell, equivalent to 30 mAh | | | | | | |

### 4.2 V design, Positive electrode: LiCo1 / 3Ni1 / 3Mn1 / 3O₂, Negative electrode: graphite, Separator: PE

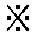 1 Capacity measurement condition
   Charge: 4.2V 1C (30 mA), constant current and constant voltage charge, 0.6 mA termination => Discharge: 0.2C (6 mA) / 1C (30 mA), constant current discharge 2.75 V termination 0.2C / 1C was the ratio of each discharge capacity
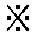 2 Discharge capacity measurement condition
   Charge: 4.2V 1C (30 mA), constant current and constant voltage charge, 0.6 mA termination 25 °C
   => Pause 0 °C 2 hours => Discharge: 1C (30 mA), constant current discharge 2.75 V termination 0°C
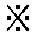 3 Charge capacity measurement condition
   Discharge: 0.2C (6 mA), constant current discharge, termination 2.75 V 25 °C => Pause 0 °C 2 hours => Charging condition 1C (30 mA) 4. 2 V constant current charge
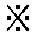 4 Charge condition: 4.2V 1C (30 mA) constant current and constant voltage charge 0.6 mA, termination 45 °C
   => Discharge condition: 1C (30 mA) 2.75 V termination 45 °C

In contrast to Comparative Example 1, in the test using the sample of the Examples, the cycle characteristics and the charging characteristics at low temperature were improved as the amount of LiFSO ₃ increased. On the other hand, the capacity and rate characteristics improved as the amount of FSO₂NH₂ increased. In addition, the cycle characteristics were improved by including FSO₂NH₂, compared with the sample of Comparative Example 1.

### Example 8

1.17 g (45 mmol) of LiF was weighed out and put into a PFA reaction vessel. The reaction vessel was cooled with ice, and 9.59 g (53 mmol) of HFSI was added. The solution for reaction was heated to 120 °C and reacted for 1.5 hours. The reacted solution was degassed under reduced pressure for 2 hours at 10 hPa at 140 °C. As a result, 7.30 g of LiFSI was obtained. The amount of LiFSI produced was determined by F-NMR measurement.

### Example 9

3.2 g (125 mmol) of LiF was weighed out and put into a PFA reaction vessel. The reaction vessel was cooled with ice and 25.0 g (139 mmol) of HFSI was added. The solution for reaction was heated to 140 °C and reacted for 1 hour. The reacted solution was subjected to reduced pressure devolatilization at 1.4 KPa at 140 °C for 2 hours. As a result, 22.70 g of LiFSI was obtained.

### Example 10

1.43 g (55 mmol) of LiF was weighed out and put into a PFA reaction vessel. The reaction vessel was cooled with ice, and 7.45 g (41 mmol) of HFSI was added. The solution for reaction was heated to 120 °C and reacted for 1.5 hours. The reacted solution was degassed under reduced pressure for 2 hours at 10 hPa at 140 °C. As a result, 7.40 g of LiFSI [bis (fluorosulfonyl) imide lithium salt] was obtained. The amount of LiFSI produced was determined by F-NMR measurement.

### Comparative Example 2

Composition containing LiFSI was obtained according to the method disclosed in JP 2014-201453 A.

Each composition containing LiFSI obtained in Examples 8 to 10 and Comparative Example 2 was analyzed by F-NMR to quantify LiFSO₃. Contents of F ⁻ ion and SO ₄ ²⁻ ion in LiFSI were analyzed by ion chromatography. In addition, 1 g of the composition containing LiFSI obtained in Example 8, Example 9 or Comparative Example 2 was respectively dissolved in 30 ml of super dehydrated methanol solvent [manufactured by Wako Pure Chemical Industries, Ltd., water content 10 mass ppm or less] to quantitate HF by neutralization titration with 0.01 N NaOH methanol solution (titration temperature 25 °C). As pH, an initial value of the neutralization titration was measured with pH electrode.

The results are shown in Table 3. Note that F-NMR has a detection limit of 100 mass ppm, and ion chromatographic determination limit is 1 mass ppm.

### [Table 3]

**Table 3**

| | | Example 8 | Example 9 | Example 10 | Comparative Example 2 |
|---|---|---|---|---|---|
| LiFSO₃ | mass % | 2.8 | 0.9 | 1.7 | N.D. |
| F⁻ | mass ppm | 15897 | 2468 | 33006 | 16 |
| HF | mass ppm | 900 | 221 | 593 | 17 |
| SO₄²⁻ | mass ppm | 4556 | 172 | 5543 | N.D. |
| pH | | 4.2 | 6.3 | 6.7 | 6.0 |

Electrolytic solutions having composition of 0.6 M LiFSI + 0.6 M LiPF₆ EC / MEC = 3/7 were prepared by using each composition containing LiFSI obtained in Examples 8 to 10 and Comparative Example 2. In weighing, FSI was adjusted to 1.2 M / L with considering a content of LiFSO₃. A commercially available product was used for LiPF₆. ES means ethylene carbonate, and MEC means methyl ethyl carbonate.

Cell evaluation was carried out using each of these electrolytes. As a cell used for cell evaluation, a laminate cell with a charging voltage of 4.35 V, a design of 34 mAh and having LiCoO₂ as a positive electrode, graphite as a negative electrode and PE (polyethylene) separator, was used.

### <Measurement of Initial Rate Characteristics (25 °C)>

Cells of the above-mentioned specifications were charged and discharged under the following conditions, and initial rate characteristics were measured.
Charge: Constant current and constant voltage charge: 4.35 V 1C (34 mA), 1/50 C (0.68 mA) termination
=> Discharge: Constant current discharge: 0.2 C (6.8 mA), 1 C (34 mA), 2 C (68 mA), 2.75 V termination at each rate

Initial rate characteristics (25 °C) were evaluated by using 0.2 C discharge capacity and a ratio (%) of 1C and 2C discharge capacities. The results are shown in Table 4. Examples 8 to 10 are improved as compared with Comparative Example 2.

### [Table 4]

**Table 4**

| | Example 8 | Example 9 | Example 10 | Comparative Example 2 |
|---|---|---|---|---|
| 0.2C/1C | 94.0 | 94.2 | 93.9 | 93.5 |
| 0.2C/2C | 90.4 | 89.0 | 90.1 | 88.9 |

### < Initial Low-temperature Input / output Characteristics Evaluation>

Initial low-temperature input / output characteristics of the cell using the electrolytic solution using each composition containing LiFSI obtained in Examples 8 to 10 and Comparative Example 2 were evaluated as follows.
- Ratio (%) of (Charge capacity from 0.2 C constant current 2.75V termination discharge state to 0 °C 1C constant current charge 4.35V termination) / (Charge capacity from 0.2C constant current 2.75V termination discharge state to 25°C 4.35V 1C constant current and constant voltage charge 1/50C termination) was taken as low-temperature input characteristics.
- Ratio (%) of (Discharge capacity from 25°C 4.35V 1C constant current constant voltage charge 1/50 C terminated charge state to 0°C 1C constant current discharge 2.75 V termination) / (Discharge capacity from 25°C 4.35 V 1C constant current and constant voltage charge 1 / 50C terminated charge state to 25°C 1C constant current discharge 2.75 V termination) was taken as low-temperature discharge characteristics.

Initial low-temperature input / output characteristics were evaluated by using ratios (%) of the low-temperature input characteristics and the low-temperature discharge characteristics. The results are shown in Table 5.

### [Table 5]

**Table 5**

| | Example 8 | Example 9 | Example 10 | Comparative Example 2 |
|---|---|---|---|---|
| 0°C low temperature discharge characteristics | 88.3 | 88.2 | 88.3 | 87.9 |
| 0°C low temperature input characteristics | 91.9 | 91.7 | 91.8 | 91.5 |

### <4.35V Charging 60°C 1 weekly Leaving Test>

25°C 4.35V 1C constant current and constant voltage charging 1/50C termination charged cells were stored at 60 °C for 1 week, and cell circuit voltages before and after storage were measured. Additionally, the cells after storage were measured in the same manner as the initial rate characteristics measurement, and the capacity retention rate was measured from the discharge capacity at each rate before and after storage.

Table 6 shows the cell circuit voltage (V), and Table 7 shows the capacity retention rate (%).

### [Table 6]

**Table 6**

| | Example 8 | Example 9 | Example 10 | Comparative Example 2 |
|---|---|---|---|---|
| Circuit voltages before storage | 4.3054 | 4.3043 | 4.3065 | 4.3015 |
| Circuit voltages after storage | 4.2115 | 4.2110 | 4.2130 | 4.2006 |

### [Table 7]

**Table 7**

| | Example 8 | Example 9 | Example 10 | Comparative Example 2 |
|---|---|---|---|---|
| 0.2C | 92.8 | 92.7 | 92.6 | 91.9 |
| 1C | 92.5 | 92.2 | 92.2 | 91.9 |
| 2C | 90.4 | 90.1 | 90.1 | 89.5 |

### <4.4V 85°C 48 hours Leaving Test after 4.35V 60°C 1 weekly Leaving>

Cells left at 60 °C for 1 week in 4.35 V charged state were additionally left at 85°C for 48 hours in 4.4V charged state.

With respect to cells used the electrolytic solution using each composition containing LiFSI obtained in Examples 8 to 10 and Comparative Example 2, the deterioration rate after storage was measured using the discharge capacity ratio at each rate before and after leaving. The results are shown in Table 8.

### [Table 8]

**Table 8**

| | Example 8 | Example 9 | Example 10 | Comparative Example 2 |
|---|---|---|---|---|
| 0.2C | 61.6% | 61.6% | 61.8% | 61.3% |
| 1C | 35.1% | 32.1% | 35.0% | 19.4% |
| 2C | 4.7% | 4.0% | 4.5% | 3.2% |

As shown in Tables 7 and 8, the capacity retention rate and the deterioration rate after storage were improved in the samples of Examples 8 to 10 containing more than 1000 mass ppm of F ions and the SO ₄ ²⁻ ion of the content not more than 6000 mass ppm, as compared the sample obtained in Comparative Example 2 containing almost no F ⁻ ions.

### <ICP Analysis>

The capacity-measured cell after 4.35V charging and leaving at 60°C for 1 week, and further leaving at 85 °C for 48 hours in 4.4 V charged state was opened in a discharged state. The electrolytic solution in the cell was taken by a centrifugal separator at 2,000 rpm for 5 minutes and diluted by a factor of 100 with a 0.4% nitric acid aqueous solution, the diluted solution was analyzed with ICP, and then, the amount of cobalt was analyzed in the electrolytic solution.

A negative electrode and a separator disassembled were separated, washed with EMC (ethylmethyl carbonate) solution respectively, and vacuum dried at 45 °C for 24 hours.

Thereafter, active materials were peeled off from the negative electrode, and the negative electrode was immersed in 1 ml of a 69% nitric acid aqueous solution for 8 hours. Further, 15 g of water was added, the aqueous solution was filtered, and the amount of cobalt in the solution was measured with ICP analysis of the aqueous solution.

Likewise, the separator was immersed in a 69% nitric acid aqueous solution for 8 hours, 15 g of water was added and filtered, and the aqueous solution after filtration was analyzed to measure a cobalt content by ICP.

The analytical values of Examples 8 to 10 are shown in Table 9, when the amount of cobalt in the electrolytic solution of Comparative Example 2 was defined as 100%. Here, a limit of the ICP determination is 0.05 ppm.

### [Table 9]

**Table 9**

| | Elution amount of Co | | |
|---|---|---|---|
| | On negative electrode Separator In electrolytic solution | | |
| Example 8 | 70.9% | 77.6% | ND |
| Example 9 | 72.4% | 80.4% | ND |
| Example 10 | 71.2% | 78.4% | ND |
| Comparative Example 2 | 100.0% | 100.0% | 100.0% |

As shown in Table 9, in Examples 8 to 10, the amounts of cobalt decreased on the negative electrode, in the separator, and in the electrolytic solution, respectively. Further, the amounts of cobalt were correlated with the content of F⁻ ions, and it turned out that the relationship was similar to the capacity retention ratio after the leaving.

As described above, by using the LiFSI composition containing the predetermined amount of F ⁻ ion and SO₄ ²⁻ ion, capacity deterioration upon leaving at high temperature was suppressed. Especially, the effect was remarkable in high-voltage and high-temperature environments.

As an estimation mechanism, it is considered that F ⁻ ions form a covered layer on the positive electrode side, the layer suppresses the elution of cobalt from the positive electrode active material at high temperature and suppresses capacity deterioration.

If the HF concentration is too high, HF corrodes the positive electrode active material or the positive electrode aluminum current collector, and then, the metal elution is promoted. Therefore, the amount of HF is preferably not less than 5,000 mass ppm.

### < Cycle Test at 45 °C >

The cells of the above specifications were charged and discharged under the following conditions, and the capacity retention ratio was measured.
Charge: constant current and constant voltage charging 4.35V 1C 1/50C termination 45°C => Discharge: constant current discharge 1C 2.75V termination 45°C
Capacity retention rates are shown in Table 10.

### [Table 10]

**Table 10**

| | Example 8 | Example 9 | Example 10 | Comparative Example 2 |
|---|---|---|---|---|
| 100 cycles | 95.6% | 94.7% | 95.7% | 94.6% |
| 200 cycles | 91.8% | 90.9% | 91.5% | 90.7% |

Accordingly, by using LiFSI composition containing LiFSO ₃, capacity deterioration during high temperature leaving was more suppressed. Especially, the effect was remarkable in high-voltage and high-temperature environments.

As an estimation mechanism, it is considered that LiFSO ₃ forms a covered layer on the positive electrode side to suppress solvent decomposition at high temperature, so that self-discharge is reduced and capacity deterioration is suppressed.

It is the similar estimation mechanism for the improvement effect of the 45 °C cycle.

On the other hand, about the improvement of low-temperature input / output characteristics and rate characteristics, it is considered that LiFSO ₃ acts also on the negative electrode to form a covering layer having high ion conductivity.

However, when the amount of LiFSO ₃ is too much, it is considered that the thickness of the covering layer may be too thick, and then, the resistance rises, so that the cell performance is deteriorated.

### INDUSTRIAL APPLICABILITY

In the present invention, the method for producing the bis (fluorosulfonyl) imide alkali metal salt and the bis (fluorosulfonyl) imide alkali metal salt composition can be applied in various uses such as electrolytes, additives to electrolytes of fuel cells, or selective electrophilic fluorinating agents, photo acid generators, thermal acid generators, near infrared absorbing dyes, or the like.

## Claims

1. A method for producing a bis (fluorosulfonyl) imide alkali metal salt by a reaction of a mixture containing bis (fluorosulfonyl) imide and an alkali metal compound,
wherein, after said reaction, a total of weight ratios of said bis (fluorosulfonyl) imide, said alkali metal compound and said bis (fluorosulfonyl) imide alkali metal salt to an entire reacted mixture is not less than 0.8.

2. The method for producing the bis (fluorosulfonyl) imide alkali metal salt of claim 1,
wherein, in said mixture containing said bis (fluorosulfonyl) imide and said alkali metal compound at a beginning of said reaction, a total of weight ratios of said bis (fluorosulfonyl) imide and said alkali metal compound to said entire mixture containing said bis (fluorosulfonyl) imide and said alkali metal compound is not less than 0.8.

3. The method for producing the bis (fluorosulfonyl) imide alkali metal salt of claim 1 or 2,
wherein said alkali metal compound is an alkali metal halide, and the method includes a step of removing a hydrogen halide formed during said reaction.

4. The method for producing the bis (fluorosulfonyl) imide alkali metal salt of claim 1 or 2,
wherein said alkali metal compound is lithium fluoride, and the method includes a step of removing a hydrogen fluoride formed during said reaction.

5. The method for producing the bis (fluorosulfonyl) imide alkali metal salt of any one of claims 1 to 4,
wherein a temperature applied in said reaction of said mixture containing said bis (fluorosulfonyl) imide and said alkali metal compound is not less than 50 ° C.

6. The method for producing the bis (fluorosulfonyl) imide alkali metal salt of any one of claims 1 to 5,
wherein a temperature applied in said reaction of said mixture containing said bis (fluorosulfonyl) imide and said alkali metal compound is from 80 ° C to 180 ° C.

7. The method for producing the bis (fluorosulfonyl) imide alkali metal salt of any one of claims 1 to 6,
wherein a pressure applied in said reaction of said mixture containing said bis (fluorosulfonyl) imide and said alkali metal compound is not higher than 1250 hPa.

8. The method for producing the bis (fluorosulfonyl) imide alkali metal salt of any one of claims 1 to 7,
wherein said alkali metal compound is lithium fluoride, and said reaction is proceeded while removing a hydrogen fluoride formed during said reaction at a pressure of not higher than 1013 hPa.

9. A bis (fluorosulfonyl) imide alkali metal salt composition, comprising an amount of not less than 90 mass% of a bis (fluorosulfonyl) imide alkali metal salt, and a solvent in an amount of not more than 100 mass ppm.

10. The bis (fluorosulfonyl) imide alkali metal salt composition of claim 9, comprising FSO₂ NH₂ in an amount of from 10 mass ppm to 1 mass%.

11. The bis (fluorosulfonyl) imide alkali metal salt composition of claim 9 or 10, comprising LiFSO₃ in an amount of from 100 mass ppm to 5 mass%.

## Patentansprüche

1. Verfahren zur Herstellung eines Bis(fluorsulfonyl)imid-Alkalimetallsalzes durch eine Reaktion einer Mischung, die Bis(fluorsulfonyl)imid und eine Alkalimetallverbindung enthält,
wobei nach der Reaktion die Summe der Gewichtsverhältnisse des Bis(fluorsulfonyl)imids, der Alkalimetallverbindung und des Bis(fluorsulfonyl)imid-Alkalimetallsalzes zu einer gesamten umgesetzten Mischung nicht weniger als 0,8 beträgt.

2. Verfahren zur Herstellung des Bis(fluorosulfonyl)imid-Alkalimetallsalzes nach Anspruch 1,
wobei in der Mischung, die das Bis(fluorsulfonyl)imid und die Alkalimetallverbindung zu Beginn der Reaktion enthält, die Summe der Gewichtsverhältnisse des Bis(fluorsulfonyl)imids und der Alkalimetallverbindung zu der gesamten Mischung, die das Bis(fluorsulfonyl)imid und die Alkalimetallverbindung enthält, nicht weniger als 0,8 beträgt.

3. Verfahren zur Herstellung des Bis(fluorsulfonyl)imid-Alkalimetallsalzes nach Anspruch 1 oder 2,
wobei die Alkalimetallverbindung ein Alkalimetallhalogenid ist und das Verfahren einen Schritt des Entfernens eines während der Reaktion gebildeten Halogenwasserstoffs aufweist.

4. Verfahren zur Herstellung des Bis(fluorsulfonyl)imid-Alkalimetallsalzes nach Anspruch 1 oder 2,
wobei die Alkalimetallverbindung Lithiumfluorid darstellt und das Verfahren einen Schritt des Entfernens eines während der Reaktion gebildeten Fluorwasserstoffs aufweist.

5. Verfahren zur Herstellung des Bis(fluorsulfonyl)imid-Alkalimetallsalzes nach einem der Ansprüche 1 bis 4,
wobei die bei der Reaktion der Mischung, die das Bis(fluorsulfonyl)imid und die Alkalimetallverbindung enthält, angewandte Temperatur nicht weniger als 50°C beträgt.

6. Verfahren zur Herstellung des Bis(fluorsulfonyl)imid-Alkalimetallsalzes nach einem der Ansprüche 1 bis 5,
wobei die bei der Reaktion der Mischung, die das Bis(fluorsulfonyl)imid und die Alkalimetallverbindung enthält, angewendete Temperatur zwischen 80°C und 180°C liegt.

7. Verfahren zur Herstellung des Bis(fluorsulfonyl)imid-Alkalimetallsalzes nach einem der Ansprüche 1 bis 6,
wobei der bei der Reaktion der Mischung, die das Bis(fluorsulfonyl)imid und die Alkalimetallverbindung enthält, angewandte Druck nicht höher als 1250 hPa ist.

8. Verfahren zur Herstellung des Bis(fluorsulfonyl)imid-Alkalimetallsalzes nach einem der Ansprüche 1 bis 7,
wobei die Alkalimetallverbindung Lithiumfluorid darstellt und die Reaktion unter Entfernung des während der Reaktion gebildeten Fluorwasserstoffs bei einem Druck von nicht mehr als 1013 hPa durchgeführt wird.

9. Bis(fluorsulfonyl)imid-Alkalimetallsalz-Zusammensetzung, aufweisend eine Menge von nicht weniger als 90 Massen-% eines Bis(fluorsulfonyl)imid-Alkalimetallsalzes und ein Lösungsmittel in einer Menge von nicht mehr als 100 Massen-ppm.

10. Bis(fluorsulfonyl)imid-Alkalimetallsalz-Zusammensetzung nach Anspruch 9, aufweisend FSO₂ NH₂ in einer Menge von 10 Masse-ppm bis 1 Masse-%.

11. Bis(fluorsulfonyl)imid-Alkalimetallsalz-Zusammensetzung nach Anspruch 9 oder 10, aufweisend LiFSO₃ in einer Menge von 100 Massen-ppm bis 5 Massen-%.

## Revendications

1. Procédé de fabrication d'un sel de métal alcalin de bis(fluorosulfonyl)imide par réaction d'un mélange contenant du bis(fluorosulfonyl)imide et un composé de métal alcalin,
dans lequel, après ladite réaction, un total de rapports en poids dudit bis(fluorosulfonyl)imide, dudit composé de métal alcalin et dudit sel de métal alcalin de bis(fluorosulfonyl)imide à un mélange entier ayant réagi n'est pas inférieur à 0,8.

2. Procédé de fabrication du sel de métal alcalin de bis(fluorosulfonyl)imide selon la revendication 1,
dans lequel, dans ledit mélange contenant ledit bis(fluorosulfonyl)imide et ledit composé de métal alcalin au début de ladite réaction, un total de rapports en poids dudit bis(fluorosulfonyl)imide et dudit composé de métal alcalin audit mélange entier contenant ledit bis(fluorosulfonyl)imide et ledit composé de métal alcalin n'est pas inférieur à 0,8.

3. Procédé de fabrication du sel de métal alcalin de bis(fluorosulfonyl)imide selon la revendication 1 ou 2,
dans lequel ledit composé de métal alcalin est un halogénure de métal alcalin, et le procédé comporte une étape d'élimination d'un halogénure d'hydrogène formé au cours de ladite réaction.

4. Procédé de fabrication du sel de métal alcalin de bis(fluorosulfonyl)imide selon la revendication 1 ou 2,
dans lequel ledit composé de métal alcalin est le fluorure de lithium, et le procédé comporte une étape d'élimination d'un fluorure d'hydrogène formé au cours de ladite réaction.

5. Procédé de fabrication du sel de métal alcalin de bis(fluorosulfonyl)imide selon l'une quelconque des revendications 1 à 4,
dans lequel une température appliquée dans ladite réaction dudit mélange contenant ledit bis(fluorosulfonyl)imide et ledit composé de métal alcalin n'est pas inférieure à 50 °C.

6. Procédé de fabrication du sel de métal alcalin de bis(fluorosulfonyl)imide selon l'une quelconque des revendications 1 à 5,
dans lequel une température appliquée dans ladite réaction dudit mélange contenant ledit bis(fluorosulfonyl)imide et ledit composé de métal alcalin est de 80 °C à 180 °C.

7. Procédé de fabrication du sel de métal alcalin de bis(fluorosulfonyl)imide selon l'une quelconque des revendications 1 à 6,
dans lequel une pression appliquée dans ladite réaction dudit mélange contenant ledit bis(fluorosulfonyl)imide et ledit composé de métal alcalin n'est pas supérieure à 1250 hPa.

8. Procédé de fabrication du sel de métal alcalin de bis(fluorosulfonyl)imide selon l'une quelconque des revendications 1 à 7,
dans lequel ledit composé de métal alcalin est le fluorure de lithium, et ladite réaction se déroule tout en éliminant un fluorure d'hydrogène formé au cours de ladite réaction à une pression qui n'est pas supérieure à 1013 hPa.

9. Composition de sel de métal alcalin de bis(fluorosulfonyl)imide, comprenant une quantité qui n'est pas inférieure à 90% en masse d'un sel de métal alcalin de bis(fluorosulfonyl)imide, et un solvant en une quantité qui n'est pas supérieure à 100 ppm en masse.

10. Composition de sel de métal alcalin de bis(fluorosulfonyl)imide selon la revendication 9, comprenant FSO₂NH₂ en une quantité allant de 10 ppm en masse à 1 % en masse.

11. Composition de sel de métal alcalin de bis(fluorosulfonyl)imide selon la revendication 9 ou 10, comprenant LiFSO₃ en une quantité allant de 100 ppm en masse à 5 % en masse.
